# EUROPÄISCHE PATENTSCHRIFT

(11) **EP 2 161 999 B1**
(45) Veröffentlichungstag und Bekanntmachung des Hinweises auf die Patenterteilung: **09.12.2015**
(21) Anmeldenummer: 08760856.8
(22) Anmeldetag: 11.06.2008
(51) Int. Cl.: A01N 47/06, A23F 3/16, A23L 2/44

(54) **VERFAHREN ZUR MIKROBIELLEN STABILISIERUNG VON GETRÄNKEN MIT EINEM PH VON GRÖßER ALS 4,2 MIT DIALKYLDICARBONATEN**
PROCESS FOR THE MICROBIAL STABILIZATION OF DRINKS HAVING A PH GREATER THAN 4.2 USING DIALKYLDICARBONATES
PROCÉDÉ DE STABILISATION MICROBIENNE DE BOISSONS DONT LE PH EST SUPÉRIEUR À 4,2 À L'AIDE DE DICARBONATES DE DIALKYLE

(30) Priorität: 23.06.2007 DE 102007029011
(43) Veröffentlichungstag der Anmeldung: 17.03.2010
(73) Patentinhaber: LANXESS Deutschland GmbH, 50569 Köln (DE)
(72) Erfinder: VOGL, Erasmus, 51373 Leverkusen (DE)
(86) Internationale Anmeldenummer: PCT/EP2008/057305
(87) Internationale Veröffentlichungsnummer: WO 2009/000652

(56) Entgegenhaltungen:
- US-A- 5 738 888
- US-A- 6 136 356
- US-B1- 6 706 309
- BIZRI J N ET AL: "CITRIC ACID AND ANTIMICROBIALS AFFECT MICROBIOLOGICAL STABILITY AND QUALITY OF TOMATO JUICE" JOURNAL OF FOOD SCIENCE, WILEY-BLACKWELL PUBLISHING, INC, US, Bd. 59, Nr. 1, 1. Januar 1994 (1994-01-01), Seiten 130-134, XP001079571 ISSN: 0022-1147

## Beschreibung

Die Erfindung betrifft Verfahren zur mikrobiellen Stabilisierung (Entkeimung) von Getränken mit einem pH von größer als 4.2.

Dialkyldicarbonate werden in der Getränkeindustrie zur Kaltentkeimung von alkoholfreien karbonisierten oder stillen Fruchtsaftgetränken, Fruchtsäften, Weinen, alkoholfreien Weinen, Ciders, Eis-Tees und anderen Getränken eingesetzt. Diese Technologie der Getränkestabilisierung hat eine Reihe von Vorteilen. Der herausragende Vorteil liegt dabei in der Tatsache begründet, dass Geschmack und Farbe im Gegensatz zur Heißabfüllung nicht beeinflusst werden. Auch gegenüber persistenten Konservierungsstoffen wie Benzoat bzw. Benzoesäure oder Sorbat bzw. Sorbinsäure besteht der Vorteil insbesondere in der Abwesenheit jeglicher geschmacklicher Beeinträchtigungen. Gegenüber einer kaltaseptischen Abfüllung sind besonders die ganz wesentlich geringeren Investitionskosten in Anlagentechnik als Vorteil beim Einsatz von Dialkyldicarbonaten bekannt.

Die Substanzklasse der Dialkyldicarbonate hat die besondere Eigenschaft, in Kontakt mit entsprechenden (wässrigen) Getränken in die abgeleiteten Alkohole und Kohlendioxid zu hydrolysieren. In Abhängigkeit von der Temperatur der Getränke während der Anwendung ist deshalb schon nach relativ kurzer Zeit die eigentlich aktive Substanz nicht mehr im Getränk vorhanden. Bei den üblichen Temperaturen zwischen 5 und 20 °C ist dies nach einigen Stunden der Fall. Die Wirkung von Dialkyldicarbonaten durch verschiedene Methoden oder Kombinationen zu verbessern ist bereits in der Patentliteratur vielfach beschrieben wie bspw. in DE-A-4434314, US-A-5738888, WO 200187096 oder US-A-2001046538.

Man geht davon aus, dass Dialkyldicarbonate, um ihre Wirkung zu entfalten zunächst in die Mikroorganismen-Zelle eindiffundieren und durch Reaktion mit Enzymen eine Inaktivierung der Enzyme bewirken. Dadurch wird die Funktion der Organe der Mikroorganismen soweit gestört oder herabgesetzt dass es zum Absterben kommt.

Viele Getränke enthalten auch gelöste Aminosäuren. In Anwesenheit von Aminosäuren im Getränk, das heißt außerhalb der Mikroben-Zellen, werden diese externen Aminosäuren ebenfalls von Dialkyldicarbonaten angegriffen, allerdings kaum, solange der pH-Wert unterhalb von etwa pH 4.0 liegt. Liegt der pH-Wert jedoch oberhalb von pH 4.0 kann es vermehrt zu diesen unerwünschten Nebenreaktionen kommen und die Dialkyldicarbonate stehen nicht mehr voll zur Bekämpfung der Mikroorganismen zur Verfügung und können daher nicht mehr ihre volle Wirkung entfalten. Aus diesem Grunde werden Dialkyldicarbonate üblicherweise nur bis zu einem maximalen pH-Wert der Getränke von pH 4.0 empfohlen.

Es gibt jedoch eine ganze Reihe von Getränken welche, einen pH-Wert > 4.0 aufweisen und somit aus dem Anwendungsbereich von Dialkyldicarbonaten fallen. Typische Vertreter solcher Getränke sind grüner Tee sowie andere Tee-basierte Getränke. Ziel der Erfindung war es daher, eine Möglichkeit zu finden die mikrobielle Stabilisierung von Getränken mit einem pH-Wert oberhalb von pH 4.0 zu ermöglichen.

Es wurde nun ein Verfahren zur Herstellung von mikrobiell stabilisierten (entkeimten) Getränken mit einem pH Wert von größer 4.2, gefunden, das dadurch gekennzeichnet ist, dass man
a) zu einem Getränk mit einem pH kleiner gleich 4,2, vorzugsweise kleiner gleich 4.0,
b) wenigstens ein Dialkyldicarbonat zugibt und
c) der pH des erhaltenen Getränkes anschließend mittels einer Base auf größer 4.2 eingestellt wird.

Als bevorzugt herzustellende Getränke mit einem pH von größer 4.2, insbesondere einem pH von 4.2 bis 7.5, sind neben grünem Tee, schwarzem Tee sowie anderen Tee-Sorten und Tee-basierten Getränken auch üblicherweise eher sauer eingestellte Getränke (pH ≤ 4.2) zu nennen, die jedoch vorteilhaft auch weniger sauer eingestellt werden können. So können in diesem Zusammenhang als Beispiele karbonisierte und nicht-carbonisierte alkoholfreie Erfrischungsgetränke, Fruchtsäfte, Fruchtnektare, alkoholische Mischgetränke, aromatisierte Wässer oder Sportgetränke genannt werden.

Als einzusetzende Getränke der Komponente a) kommen bspw. alle Arten von (vergleichsweise saurem) Tee oder Teemischgetränken, carbonisierte und nicht-carbonisierte alkoholfreie Erfrischungsgetränke, Fruchtsäfte, Fruchtnektare, alkoholische Mischgetränke, aromatisierte Wässer, Sportgetränke, Kokosmilch und ähnliche in Frage.

Grundsätzlich können die Getränke der Komponente a) auch dadurch erhalten werden, das zu einem Getränk der Komponente a0) mit einem pH von größer 4 Säure zugegeben wird, um den pH auf einen Wert von kleiner gleich 4 einzustellen.

Als mögliche Getränke der Komponente a0) kommen dabei bspw. in Frage grüner Tee, schwarzer Tee, Teemischgetränke als auch Getränke wie Fruchtsäfte oder Fruchtsaftgetränke die üblicherweise vor Genuss einen Säurezusatz erhalten. Bevorzugt sind grüner und schwarzer Tee zu nennen.

Der pH Wert der Getränke der Komponente a0) beträgt vorzugsweise 4.2 bis 8.0.

Als Säuren sind bspw. flüchtige Säuren wie Kohlendioxid oder beständige Säuren zu nennen.

Als beständige Säuren sind alle Arten von organischen oder anorganischen Säuren verwendbar, insbesondere die für Lebensmittel zugelassenen Säuren oder deren Kombinationen. Hierbei sind besonders die Fruchtsäuren wie Weinsäuren, Äpfelsäuren, Zitronensäuren, Gluconsäuren oder Milchsäuren geeignet. Auch HCl, CO₂, Kohlensäure, Sorbinsäure, Ascorbinsäure, Propionsäure, Essigsäure oder Bezoesäure sind geeignet. Weiterhin Adipinsäure, Glycin, Fettsäuren, Fumarsäure, Bernsteinsäure, Phosphorige Säure, polymere oder monomere Phosphorsäuren, Phytinsäure und/oder Itaconsäure.

Bevorzugt werden für solche Fälle für Lebensmittel zugelassene Säuren wie Zitronensäure eingesetzt. Der pH kann auch mit Hilfe von Ionentauschern auf einen pH Wert von kleiner gleich 4.2 eingestellt werden.

Der Säurezusatz erfolgt zeitlich vorzugsweise vor oder nach einer Hitzebehandlung (bspw. Ultra-Heat-Treatment) des abgemischten Getränks oder aber während der Abmischung oder aber während der Herstellung des Getränks bspw. des Tees. Die Säure kann dabei kontinuierlich oder portionsweise zugegeben werden.

Das Getränk der Komponente a) kann dabei auch bereits erst im Verfahrensschritt c) wirkende Basen enthalten, vorzugsweise in einer langsam wirkenden Form oder in Form ihrer entsprechenden Vorstufen, die noch während der Zugabe von Dialkyldicarbonat in Schritt b), den geforderten pH des Getränkes nicht übersteigen lassen. Diese werden unter der Komponente c) beschrieben werden.

Sonstige Inhaltsstoffe des Getränkes der Komponente a) sind je nach Getränk in der Getränkeindustrie gebräuchliche Stoffe wie beispielsweise Farbstoffe, Antioxidationsmittel, Emulgatoren, Stabilisatoren oder Verdickungsmittel.

Bevorzugtes Dialkyldicarbonat ist das Dimethyldicarbonat (DMDC) oder das Diethyldicarbonat. Die Zugabe erfolgt vorzugsweise dadurch, dass das Dialkyldicarbonat in flüssiger Form portionsweise in das Getränk der Komponente a) eingebracht wird.

Das Getränk der Komponente a) besitzt dabei eine Temperatur von vorzugsweise -5 bis 30 °C, besonders bevorzugt von 0 bis 25 °C, insbesondere von 5 bis 22 °C.

Insbesondere DMDC wird bevorzugt mittels einer Dosierpumpe über eine beheizter Düse, in den Getränkestrom verdüst. Verbesserungen entsprechender Pumpen wurden in der Patenliteratur beschrieben beispielsweise in der DE-A 2910328 oder in der DE-A2930765. Verbesserungen der Düse bzw. der davor liegenden Mischkammer wurden beispielsweise in der DE-A-1557043 beschrieben.

Entsprechende Dosiervorrichtungen bestehen üblicherweise aus Vorratgefäßen, elektromagnetisch betriebener Dosierpumpe, Eindüsungsbereich und einem elektronisch gekoppelten induktivem Durchflussmessgerät, sowie selbstverständlich Ansaugvorrichtungen, Belüftung bzw. Temperierung, Verbindungen, Ventilen, Sensoren etc. samt verbindenden und steuernden Elektronikelementen. Die Dosierleistungen der Pumpen betragen üblicherweise 0.1 bis 20 Liter DMDC pro Stude.

Bevorzugt wird Dialkyldicarbonat in einer Menge von 1 bis 300 ppm, besonders bevorzugt von 10 bis 250 ppm bezogen auf das fertige Getränk der Komponente a), eingesetzt.

Mitverwendet werden können auch andere antimikrobiell wirkenden Stoffe, wie bspw. Benzoesäure, Benzoate, Sorbinsäure, Sorbate, Propionsäure oder auch Lysozym.

Die im Schritt c) wirkende Base kann entweder nach der Zugabe von Dialkyldicarbonat zugegeben werden oder bereits vorher. Bei Verwendung einer flüchtigen Säure zur Herstellung des einzusetzenden Getränkes der Komponente a) aus der Komponente a0) bspw. ist die Zugabe einer Base nicht zwingend erforderlich, da im Laufe der Zeit die Säure (beispielsweise durch die Flaschenwand) entweichen kann und der pH wieder ansteigt.

Unter dem Begriff der "Base" wird im Rahmen dieser Anmeldung auch die Vorstufe einer Base verstanden, die unter Hydrolyse vorzugsweise langsam eine Base bildet. Ebenfalls von dem Begriff umfasst sind Verbindungen, welche durch ihre Aktivität Säuren abbauen können

Sollte das Getränk der Komponente a) entweder von sich aus einen pH von kleiner gleich 4 haben oder erst aus der Komponente a0) durch Verwendung von beständigen Säuren hergestellt worden sein, kann kurz vor oder während der Abfüllung und natürlich auch danach sodann zusätzlich eine langsam lösliche Base oder eine Vorstufe einer Base zugegeben werden.

Unter Vorstufen von Basen sind hierbei Verbindungen oder deren Formulierungen zu verstehen, welche in Kontakt mit Wasser langsam basische Verbindungen freisetzen. Beispielsweise können als Vorstufen Anhydride von Basen zum Einsatz kommen. Eine geeignete Formulierung der Anhydride ist dabei vorteilhaft.

Ebenfalls möglich ist die Verwendung von geeigneten verkapselten basischen Verbindungen oder deren Vorstufen. Dabei ist beispielsweise sowohl eine Mikroverkapselung möglich als auch ein einziges, der Größe des Getränkegebindes angepasstes Pellet. Das Getränk kann nun mit Dialkyldicarbonat in gewohnter Weise in Gebinde abgefüllt werden. Bevorzugt ist, dass die Hydrolyse der Dialkyldicarbonate größtenteils abgeschlossen ist, bevor die zugegeben Vorstufe der Base in größerer Menge basische Verbindungen freisetzt. Allerdings sollte die Hydrolyse der Vorstufe der Base auch nicht zu langsam erfolgen, da sonst das Getränk bei Aufnahme durch den Verbraucher eventuell noch zu sauer wäre oder die Anwendung dieses Verfahrens zu übermäßig langen Auslieferungs-Sperrfristen der Getränke führen würde.

Ebenfalls möglich ist eine innen-Beschichtung oder Bedampfung der Flaschenwand, wodurch nach Befüllung basische Stoffe freigesetzt werden, bspw. MgO. Auch Packmittel, die basische Verbindungen freisetzen können, eigenen sich.

Auch die Zugabe von Verbindungen, welche durch ihre Aktivität Säuren abbauen können statt einer basischen Verbindung eingesetzt werden. Ein Beispiel hierfür ist Lysozym. Ein anderes Beispiel ist eine malolaktische Gärung bei Anwesenheit von Äpfelsäure. Ein weiteres Beispiel sind Enzyme die durch ihre Aktivität basische Verbindungen freisetzen können.

Wichtig ist insbesondere die Freisetzungsgeschwindigkeit der zugesetzten Base oder die Geschwindigkeit der Bildung der Base aus ihrer Vorstufe. Eine optimale Freisetzung der Basen liegt vor, wenn der größte Teil der Base erst nach Hydrolyse der Dialkyldicarbonate vorliegt. Eine entsprechend verzögerte Freisetzung der Base kann auf unterschiedlichen Wegen erreicht werden. Eine Möglichkeit hierzu besteht in der erwähnten Anwendung von geeigneten verkapselten Formern einer geeigneten Base.

Beispiele für geeignete Basen oder Vorstufen von Basen sind unter den in der Lebensmittelindustrie gebräuchlichen Säureregulatoren zu finden.

Beispiele für geeignete verkapselte oder unverkapselte Basen sind demnach etwa NaOH, KOH, Ca(OH)₂, Mg(OH)₂, CaO, MgO Natriumcarbonate, Kaliumcarbonate, Calcium-carbonate, Magnesiumcarbonate, Kaliumacetat, Natriumacetat, Calciumacetat, Natriumlactat, Kaliumlactat, Calciumlactat, Natriumcitrat, Kaliumcitrat, Calciumcitrat, Natriumtartrat, Kaliumtartrat, Natrium-Kaliumtartrat, Calciumtartrat, Natriumadipat, Kaliumadipat, Natriumphosphate, Kaliumphosphate, Calciumphosphate, Magnesiumphosphate, Diphosphate, Triphosphate, Natriumgluconat, Kaliumgluconat, Calciumgluconat, Natriummalat, Kalium-malat, Calciummalat, Natriumsulfate, Kaliumsulfate, Calciumsulfate, Magnesiumchlorid, oder deren Mischungen. Auch gemischte Carbonate oder Oxide sind dabei verwendbar.

Auch natürlich vorkommende Basen und basische Verbindungen sind geeignet, besonders solche die ohnehin in Lebensmitteln enthalten sind oder in solchen eingesetzt werden.

Beispiele für geeignete Hüllstoffe oder Kapselmaterialien sind alle üblicherweise für Verkapselungen und Microverkapselungen verwendeten organischen oder anorganischen Substanzen, besonders Polymere wie Zucker-basierte Polymere und Polysaccharide wie Agar, Carrageen, Pektine oder Alginate. Ebenfalls geeignet sind Protein-basierte Polymere wie Gelatine oder verwandte Substanzen. Ebenfalls geeignete Kapselmaterialien sind Latices natürlicher oder künstlicher Herkunft sowie Polyethylen, Polypropylen oder PET. Auch Lacke oder aufgebrachte Beschichtungen, die sich in Wasser auflösen können oder halbdurchlässig für Wasser sind, eignen sich als Hülle.

Beispiele für Anhydride von Basen sind CaO, MgO oder K₂O.

Der Besondere Vorteil des Verfahrens besteht auch darin, dass insbesondere für den bevorzugt einzustellenden pH Bereich von 4.2 bis 7 nur relativ geringe Mengen an Base notwenig sind, um eine vergleichsweise deutliche pH-Veränderung zu bewirken. In säurehaltigeren Getränken ist dies nicht mehr der Fall.

Bevorzugt ist das erfindungsgemäße Verfahren, indem das Getränk der Komponente a) aus einem Getränk der Komponente a0) erhalten wird unter Zusatz von Kohlensäure und/oder Zitronensäure, danach wird vorzugsweise eine langsam lösliche Base oder eine Vorstufe davon aus der Gruppe der Säureregulatoren ggf. auch in verkapselter Form der Komponente a) zugegeben, gefolgt von einer anschließenden, vorzugsweise pulsierenden Zugabe von DMDC.

### Beispiele:

### Beispiel 1

Ein grüner Tee (500 ml) mit pH 7.1 wurde mit 381.6 mg Zitronensäure Monohydrat auf pH 4.0 eingestellt. Daraufhin wurde mit 80 mg pulverisiertem NaOH, welches in Gelatine verkapselt war, versetzt. Nach Zugabe von 250 ppm Dimethyldicarbonat wurde in 500 ml Flaschen abgefüllt und die Gebinde luftdicht verschlossen. Die so abgefüllten Gebinde waren nach 4 Wochen noch ohne mikrobiellen Befall. Der Tee hatte bei der Prüfung einen pH-Wert von pH 5.

Der gleiche grüne Tee wurde ohne entsprechende Konservierung abgefüllt und war nach drei Tagen durch mikrobiellen Befall verdorben.

### Beispiel 2

Ein grüner Tee (500 ml) mit pH 7.1 wurde mit 381.6 mg Zitronensäure Monohydrat auf pH 4.0 eingestellt. Daraufhin wurde mit 65 mg CaO, welches in Gelatine verkapselt war, versetzt. Nach Zugabe von 250 ppm Dimethyldicarbonat wurde in 500 ml Flaschen abgefüllt und die Gebinde luftdicht verschlossen. Die so abgefüllten Gebinde waren nach 4 Wochen noch ohne mikrobiellen Befall. Der Tee hatte bei der Prüfung einen pH-Wert von pH 4.9.

Der gleiche grüne Tee wurde ohne entsprechende Konservierung abgefüllt und war nach zwei Tagen durch mikrobiellen Befall verdorben.

### Beispiel 3

Ein grüner Tee (500 ml) mit pH 6.9 wurde mit 379.0 mg Zitronensäure Monohydrat auf pH 4.0 eingestellt. Daraufhin wurde mit 350 mg fein pulverisiertem Calciumcarbonat oder wahlweise mit 400 mg Magnesiumcarbonat versetzt. Nach Zugabe von 250 ppm Dimethyldicarbonat wurde in 500 ml Flaschen abgefüllt und die Gebinde luftdicht verschlossen. Die so abgefüllten Gebinde waren nach 4 Wochen noch ohne mikrobiellen Befall. Mit dem gleichen Ergebnis konnte die Zugabe der Base auch erst nach Zugabe von Dimethyldicarbonat erfolgen.

Der gleiche grüne Tee wurde ohne entsprechende Konservierung abgefüllt und war nach vier Tagen durch mikrobiellen Befall verdorben.

## Patentansprüche

1. Verfahren zur Herstellung von mikrobiell stabilisierten Getränken mit einem pH Wert von größer 4.2, **dadurch gekennzeichnet, dass** man
a) zu einem Getränk mit einem pH kleiner gleich 4,2
b) wenigstens ein Dialkyldicarbonat zugibt und
c) der pH des erhaltenen Getränkes anschließend mittels einer Base auf größer 4.2 eingestellt wird.

2. Verfahren gemäß Anspruch 1, **dadurch gekennzeichnet, dass** das Getränk der Komponente a) erhalten wurde, durch ein Getränk der Komponente a0) mit einem pH von größer 4.2 durch Zugabe von Säuren.

3. Verfahren gemäß Anspruch 1, **dadurch gekennzeichnet, dass** als Dialkyldicarbonat Dimethyldicarbonat eingesetzt wird.

4. Verfahren gemäß Anspruch 1, **dadurch gekennzeichnet, dass** als Dialkyldicarbonat Diethyldicarbonat eingesetzt wird.

## Claims

1. Method for producing microbially stabilized drinks having a pH greater than 4.2, **characterized in that**
a) to a drink having a pH less than or equal to 4.2
b) at least one dialkyl dicarbonate is added and
c) the pH of the resultant drink is subsequently set by means of a base to greater than 4.2.

2. Method according to Claim 1, **characterized in that** the drink of the component a) was obtained by means of a drink of component a0) having a pH of greater than 4.2 by adding acids.

3. Method according to Claim 1, **characterized in that** the dialkyl dicarbonate used is dimethyl dicarbonate.

4. Method according to Claim 1, **characterized in that** the dialkyl dicarbonate used is diethyl dicarbonate.

## Revendications

1. Procédé de fabrication de boissons stabilisées par des microbes dont le pH est supérieur à 4,2, **caractérisé en ce que**
a) une boisson dont le pH est inférieur ou égal à 4,2
b) est supplémentée avec au moins un dicarbonate de dialkyle, puis
c) le pH de la boisson obtenue est ajusté à plus de 4,2 au moyen d'une base.

2. Procédé selon la revendication 1, **caractérisé en ce que** la boisson selon le composant a) a été obtenue par ajout d'acides à une boisson selon le composant a0) dont le pH est supérieur à 4,2.

3. Procédé selon la revendication 1, **caractérisé en ce que** du dicarbonate de diméthyle est utilisé en tant que dicarbonate de dialkyle.

4. Procédé selon la revendication 1, **caractérisé en ce que** du dicarbonate de diéthyle est utilisé en tant que dicarbonate de dialkyle.
